# EUROPEAN PATENT SPECIFICATION

(11) **EP 3 480 544 B1**
(45) Date of publication and mention of the grant of the patent: **24.06.2020**
(21) Application number: 18193976.0
(22) Date of filing: 12.09.2018
(51) Int. Cl.: F27D 3/18, F27D 3/16, F27B 3/22, F27B 1/16, C21C 5/52

(54) **FLUID ASSISTED PARTICLE INJECTOR**
FLUIDUNTERSTÜTZTER PARTIKELINJEKTOR
INJECTEUR DE PARTICULES ASSISTÉ PAR UN FLUIDE

(30) Priority: 03.11.2017 US 201715803526
(43) Date of publication of application: 08.05.2019
(73) Proprietor: Berry Metal Company, Harmony, PA 16037 (US)
(72) Inventor: KOVACIC, Thomas, Harmony, PA Pennsylvania 16037 (US); BUGAR, Gary, Harmony, PA Pennsylvania 16037 (US); GEIBEL, Kenneth, Harmony, PA Pennsylvania 16037 (US)
(74) Representative: Barton, Matthew Thomas

(56) References cited:
- EP-A2- 1 170 386
- GB-A- 191 113 989

## Description

This application claims the benefit of priority from patent application U.S. Serial No. 15/803,526 filed November 3, 2017, which is incorporated by reference herein for all purposes.

### FIELD OF THE DISCLOSURE

The present disclosure generally relates to an improved particle injector useful in apparatus such as auxiliary burners and the like in metal melting, decarburization, refining and processing, for example, steel making in an electric arc furnace (EAF) or blast furnace.

### BACKGROUND OF THE DISCLOSURE

Generally auxiliary burners are used to assist in the steel making process to add thermal energy by the combustion of fuel, the injection of oxidizing gas for melt refining, foamy slag production or post combustion of carbon monoxide, and the injection of particulates for slag and foamy slag production. The use of swirlers in order to enhance the mixing effect of gasses in nozzles is known from GB1911-13989A. In many instances, the oxidizing gas is introduced as a high velocity stream that may exceed sonic velocities.

Existing particle injectors have various deficiencies that detract from the efficiency and economy of the steelmaking process.

In order to overcome the disadvantages associated with typical particle injectors, it would be desirable to provide a particle injector that provides a simple effective alternative to more complex known injector designs and features reduced plugging, improved carbon/lime velocity; improved carbon/lime delivery to bath; ease of manufacturing and maintenance, and improved service life.

### BRIEF SUMMARY OF THE DISCLOSURE

Many other variations are possible with the present disclosure, and those and other teachings, variations, and advantages of the present disclosure will become apparent from the description and figures of the disclosure.

One aspect of a preferred embodiment of the present disclosure comprises a fluid assisted particle injector for a metallurgical furnace, comprising: an injector tube having an entrance end, an exit end and a removable tip; a cover tube disposed over the injector tube; a fluid and particle injector port in line with the longitudinal center axis of the injector tube and a secondary fluid port for directing pressurized fluid over the outside of the injector tube and within the cover tube; the injector tube defining a tapered internal bore having a particle entrance end and a particle exit end, wherein the diameter of the particle exit end is smaller than the diameter of the particle entrance end.

In another aspect of a fluid assisted particle injector of the present disclosure, the removable tip of the injector tube defines a plurality of longitudinal grooves or channels on its outer surface which effectively act as nozzles for directing secondary air flow outside the removable tip for assisting with the injection of particles into the furnace.

In another aspect, the fluid assisted particle injector further comprises a wear liner disposed in the internal bore.

In another aspect of a fluid assisted particle injector of the present disclosure, the wear liner comprises a ceramic material, a replaceable ceramic material, other material or a coating.

### BRIEF DESCRIPTION OF THE SEVERAL VIEWS OF THE DRAWINGS

For the present disclosure to be easily understood and readily practiced, the present disclosure will now be described for purposes of illustration and not limitation in connection with the following figures, wherein:
**FIG. 1** shows an exterior top, perspective view of a preferred fluid assisted particle injector according to the present disclosure; and
**FIG. 2** shows an exterior top, perspective view of the tip of the fluid assisted particle injector of FIG. 1 with the cover tube removed.

### DETAILED DESCRIPTION

In the following detailed description, reference is made to the accompanying examples and figures that form a part hereof, and in which is shown by way of illustration specific embodiments in which the inventive subject matter may be practiced. These embodiments are described in sufficient detail to enable those skilled in the art to practice them, and it is to be understood that other embodiments may be utilized and that structural, logical, and electrical changes may be made without departing from the scope of the inventive subject matter. Such embodiments of the inventive subject matter may be referred to, individually and/or collectively, herein by the term "disclosure" merely for convenience and without intending to voluntarily limit the scope of this application to any single disclosure or inventive concept if more than one is in fact disclosed.

The following description is, therefore, not to be taken in a limited sense, and the scope of this disclosure is defined by the appended claims.

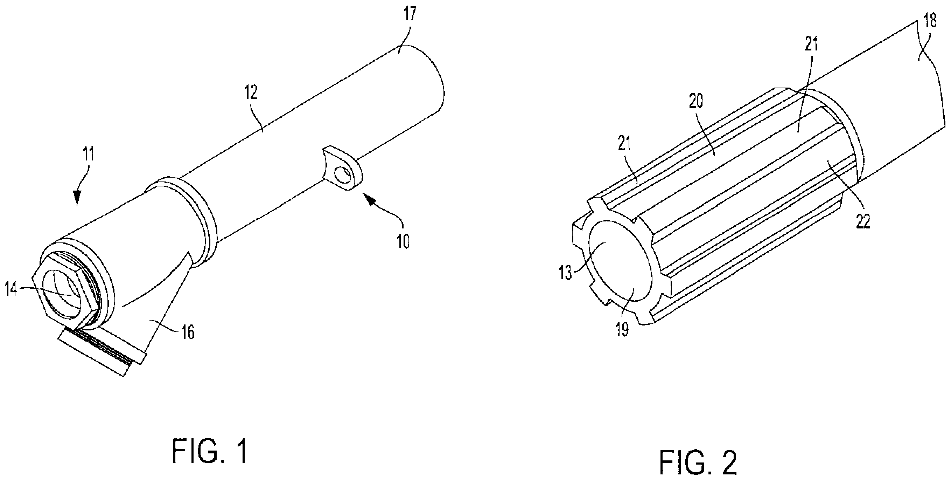

FIGS. 1-2 show a preferred fluid (air, gas, etc.) assisted particle (carbon/lime) injector 10 of the present disclosure that provides a simple effective alternative to more complex known injector designs and features reduced plugging; improved carbon/lime velocity; improved carbon/lime delivery to bath; ease of manufacturing and maintenance, and improved service life.

The preferred fluid assisted particle (carbon/lime) injector 10, such as for an EAF (Electric Arc Furnace), blast furnace or other type of metallurgical furnace, of the present disclosure, comprises: an injector tube 18 having an entrance end 11, an exit end 17 and a removable tip 20; a cover tube 12 disposed over the injector tube 18 and tip 20; a fluid/particle injector port 14 in line with the longitudinal center axis of the injector tube 18 and a secondary fluid port 16 for directing pressurized fluid over the outside of the injector tube 18 and within the cover tube 12; the injector tube 18 defining a tapered internal bore having a particle entrance end and a particle exit end, wherein the diameter of the particle exit end is smaller than the diameter of the particle entrance end.

In another aspect of a preferred fluid assisted particle injector 10 of the present disclosure, the removable tip 20 of the injector tube 18 defines a plurality of longitudinal grooves or channels 22 on its outer surface, such as between ribs 21, which effectively act as nozzles for directing secondary air flow outside the removable tip 20 for assisting with the injection of particles into the furnace.

In yet another aspect, a preferred fluid assisted particle injector 10 of the present disclosure further comprises a permanent or removable wear liner 19 disposed in the internal bore 13.

In another aspect of a preferred fluid assisted particle injector 10 of the present disclosure, the wear lining 19 comprises a ceramic material, a replaceable ceramic material, a replaceable other material or a coating.

It will be appreciated that this background description has been created by the inventors to aid the reader, and is not to be taken as an indication that any of the indicated problems were themselves appreciated in the art. While the described principles can, in some respects and embodiments, alleviate the problems inherent in other systems, it will be appreciated that the scope of the protected innovation is defined by the attached claims, and not by the ability of any disclosed feature to solve any specific problem noted herein.

## Claims

1. A fluid assisted particle injector (10) for a metallurgical furnace, comprising:
a cover tube (12);
an injector tube (18) defining an internal bore (13) and having an entrance end (11), an exit end (17), a removable tip (20) having an outer surface, a longitudinal center axis, and an outside surface, wherein the cover tube (12) is disposed over the injector tube, and wherein the injector tube (18) is substantially housed within the cover tube (12);
the entrance end (11) of the injector tube (18) comprising both (i) a fluid and particle injector port (14) in line with the longitudinal center axis of the injector tube (18) for directing fluid and particles within the internal bore of the injector tube (18), and (ii) a secondary fluid port (16) for directing a secondary fluid over the outside surface of the injector tube (18) and within the cover tube;
the internal bore (13) of the injector tube (18) being tapered and having a particle entrance end (11) comprising a diameter at the entrance end (11) of the injector tube (18) and a particle exit end (17) comprising a diameter at the exit end (17) of the injector tube (18), wherein the diameter of the particle entrance end (11) is larger than the diameter of the particle exit end (17); and
the removable tip (20) of the injector tube (18) defining a plurality of longitudinal grooves or channels (22) on the outer surface of the removable tip (20), wherein the grooves or channels (22) effectively act as nozzles for directing the secondary fluid outside the removable tip (20) for assisting with the injection of particles directly into the furnace.

2. The fluid assisted particle injector of claim 1, wherein the secondary fluid port (16) is offset from the longitudinal center axis of the injector tube (18).

3. The fluid assisted particle injector of claim 2, wherein the secondary fluid is air.

4. The fluid assisted particle injector of any one of claims 1 to 3, further comprising a wear liner (19) disposed in the internal bore (13) of the injector tube (18).

5. The fluid assisted particle injector of claim 4, wherein the wear liner (19) comprises a ceramic material, a replaceable ceramic material or a coating.

## Patentansprüche

1. Fluidunterstützter Teilcheninjektor (10) für einen metallurgischen Ofen, der Folgendes umfasst:
ein Abdeckrohr (12);
ein Injektorrohr (18), das eine Innenbohrung (13) definiert und ein Eintrittssende (11), ein Austrittsende (17), eine entfernbare Spitze (20), die eine Außenoberfläche aufweist, eine Längsmittelachse und eine Außenoberfläche aufweist, wobei das Abdeckrohr (12) über dem Injektorrohr angeordnet ist, und wobei das Injektorrohr (18) im Wesentlichen innerhalb des Abdeckrohrs (12) aufgenommen ist;
wobei das Eintrittsende (11) des Injektorrohrs (18) sowohl (i) eine Fluid- als auch eine Teilcheninjektoröffnung (14) in einer Linie mit der Längsmittelachse des Injektorrohrs (18) zum Leiten von Fluid und Teilchen innerhalb der Innenbohrung des Injektorrohrs (18) als auch (ii) eine Sekundärfluidöffnung (16) zum Leiten eines Sekundärfluids über die Außenoberfläche des Injektorrohrs (18) und innerhalb des Abdeckrohrs umfasst;
wobei die Innenbohrung (13) des Injektorrohrs (18) verjüngt ist und ein Teilcheneintrittsende (11), das einen Durchmesser an dem Eintrittsende (11) des Injektorrohrs (18) umfasst, und ein Teilchenaustrittsende (17) aufweist, das einen Durchmesser an dem Austrittsende (17) des Injektorrohrs (18) umfasst, wobei der Durchmesser des Teilcheneintrittsendes (11) größer ist als der Durchmesser des Teilchenaustrittsendes (17); und
wobei die entfernbare Spitze (20) des Injektorrohrs (18) mehrere Längsnuten oder -kanäle (22) an der Außenoberfläche der entfernbaren Spitze (20) definiert, wobei die Nuten oder Kanäle (22) wirksam als Düsen zum Leiten des Sekundärfluids außerhalb der entfernbaren Spitze (20) zum Unterstützen der direkten Teilcheninjektion in den Ofen fungieren.

2. Fluidunterstützter Teilcheninjektor nach Anspruch 1, wobei die Sekundärfluidöffnung (16) von der Längsmittelachse des Injektorrohrs (18) versetzt ist.

3. Fluidunterstützter Teilcheninjektor nach Anspruch 2, wobei das Sekundärfluid Luft ist.

4. Fluidunterstützter Teilcheninjektor nach einem der Ansprüche 1 bis 3, der ferner eine Verschleißauskleidung (19), die in der Innenbohrung (13) des Injektorrohrs (18) angeordnet ist, umfasst.

5. Fluidunterstützter Teilcheninjektor nach Anspruch 4, wobei die Verschleißauskleidung (19) ein Keramikmaterial, ein austauschbares Keramikmaterial oder eine Beschichtung umfasst.

## Revendications

1. Injecteur de particules assisté par fluide (10) pour un four métallurgique, comprenant :
un tube de recouvrement (12) ;
un tube injecteur (18) définissant un alésage interne (13) et ayant une extrémité d'entrée (11), une extrémité de sortie (17), un embout amovible (20) ayant une surface externe, un axe central longitudinal et une surface extérieure, dans lequel le tube de recouvrement (12) est disposé sur le tube injecteur, et dans lequel le tube injecteur (18) est sensiblement logé à l'intérieur du tube de recouvrement (12) ;
l'extrémité d'entrée (11) du tube injecteur (18) comprenant à la fois (i) un orifice d'injection de fluide et de particules (14) aligné avec l'axe central longitudinal du tube injecteur (18) pour diriger du fluide et des particules à l'intérieur de l'alésage interne du tube injecteur (18), et (ii) un orifice de fluide secondaire (16) pour diriger un fluide secondaire sur la surface extérieure du tube injecteur (18) et à l'intérieur du tube de recouvrement ;
l'alésage interne (13) du tube d'injection (18) étant effilé et ayant une extrémité d'entrée de particules (11) comprenant un diamètre au niveau de l'extrémité d'entrée (11) du tube injecteur (18) et une extrémité de sortie de particules (17) comprenant un diamètre au niveau de l'extrémité de sortie (17) du tube injecteur (18), dans lequel le diamètre de l'extrémité d'entrée de particules (11) est supérieur au diamètre de l'extrémité de sortie de particules (17) ; et
l'embout amovible (20) du tube injecteur (18) définissant une pluralité de rainures ou canaux longitudinaux (22) sur la surface externe de l'embout amovible (20), dans lequel les rainures ou canaux (22) agissent concrètement comme des buses pour diriger le fluide secondaire à l'extérieur de l'embout amovible (20) pour faciliter l'injection de particules directement dans le four.

2. Injecteur de particules assisté par fluide selon la revendication 1, dans lequel l'orifice de fluide secondaire (16) est décalé par rapport à l'axe central longitudinal du tube injecteur (18).

3. Injecteur de particules assisté par fluide selon la revendication 2, dans lequel le fluide secondaire est de l'air.

4. Injecteur de particules assisté par fluide selon l'une quelconque des revendications 1 à 3, comprenant en outre une doublure d'usure (19) disposée dans l'alésage interne (13) du tube injecteur (18).

5. Injecteur de particules assisté par fluide selon la revendication 4, dans lequel la doublure d'usure (19) comprend un matériau céramique, un matériau céramique remplaçable ou un revêtement.
